Europäisches Patentamt

European Patent Office

Office européen des brevets

(19)

(11) Veröffentlichungsnummer : **0 040 644**
**B1**

(12) **EUROPÄISCHE PATENTSCHRIFT**

(45) Veröffentlichungstag der Patentschrift :
13.07.83

(51) Int. Cl.³ : **B 65 G 65/32**

(21) Anmeldenummer : **80106353.8**

(22) Anmeldetag : **18.10.80**

(54) **Fahrzeugsilo.**

(30) Priorität : **24.05.80 DE 3020054**

(43) Veröffentlichungstag der Anmeldung :
**02.12.81 Patentblatt 81/48**

(45) Bekanntmachung des Hinweises auf die Patenterteilung : **13.07.83 Patentblatt 83/28**

(84) Benannte Vertragsstaaten :
**AT BE CH DE FR GB IT LI LU NL SE**

(56) Entgegenhaltungen :
**DE A 2 227 096**
**DE C 480 769**

(73) Patentinhaber : **Degussa Aktiengesellschaft**
**Weissfrauenstrasse 9**
**D-6000 Frankfurt am Main 1 (DE)**

(72) Erfinder : **Schmitz, Werner**
**Lapshof 4**
**D-6467 Hasselroth 2 (DE)**

Fahrzeugsilo

Pulverförmige pyrogen hergestellte Oxide von Metallen oder Metalloiden, wie z. B. $Al_2O_3$, $SiO_2$ oder $TiO_2$ zeichnen sich in der Regel durch eine extreme Teilchenfeinheit und damit durch ein extrem niedriges Schüttgewicht aus.

So weist z. B. pyrogen hergestelltes Siliciumdioxid je nach Type einen mittleren Teilchendurchmesser in dem Bereich von 5 bis 50 nm auf. Die Stampfdichte des pyrogen hergestellten Siliciumdioxides kann zwischen 40 und 120 g/l liegen.

Aufgrund dieses extrem niedrigen Schüttgewichtes beanspruchen derartige pulverförmige Stoffe ein großes Transportvolumen.

Eine Verminderung des Transportvolumens durch zum Beispiel Vakuumentlüftung an Entlüfterwalzen vor dem Befüllen des Silofahrzeuges hat den Nachteil, daß bestimmte maximale Werte für die Stampfdichte überschritten werden. Die Folge ist, daß bestimmte anwendungstechnische Eigenschaften, wie z. B. das Verdickungsverhalten, nicht mehr den gestellten Anforderungen entsprechen. Zusätzlich wird die Feinteiligkeit durch Agglomeratbildung verändert, wodurch ebenfalls die anwendungstechnischen Eigenschaften beeinträchtigt werden können.

Ein Transport in Silofahrzeugen erscheint deshalb nur mit nicht entlüftetem Oxid möglich und verursacht daher relativ hohe Kosten.

Aus der DE-C-836 159 ist eine Vorrichtung zur Erhöhung des Raumgewichtes pulverförmiger Stoffe unter Anwendung von Vakuum bekannt. Dazu wird ein nur unten offenes Rohr in die Bodenschichten des Pulvers geführt. Ein Fahrzeugsilo zum Befüllen mit staubförmigen Stoffen ist aus der DE-C-480 769 bekannt. Bei diesem wird die Luft oberhalb der eingefüllten Stoffe durch Abschlußstutzen abgesaugt.

Die Erfindung geht von den im Oberbegriff des Anspruchs angegebenen und durch die DE-C-480 769 bekannten Fahrzeugsilos aus.

Die Aufgabe der Erfindung ist es, pyrogen hergestellte Oxide von Metallen oder Metalloiden bei dem Befüllen des Transportfahrzeuges so zu entlüften, daß das Transportvolumen deutlich vermindert wird, ohne daß die anwendungstechnischen Eigenschaften beeinträchtigt werden. Die Lösung dieser Aufgabe besteht darin, daß die Entlüftungsvorrichtung mindestens zwei parallel zur Silolängsachse angeordnete Entlüftungsleitungen aufweist, die zum Entfernen der zwischen den Stoffteilchen befindlichen Luft dienen.

Besonders vorteilhaft kann eine Anzahl von 4 Entlüftungsleitungen eingesetzt werden. Der angewandte Unterdruck kann 400 bis 700 mm Wassersäule betragen.

Die erfindungsgemäße Entlüftungsvorrichtung weist den Vorteil auf, daß der pulverförmige Stoff mit einem hohen Schüttgewicht in einem Silofahrzeug transportiert werden kann, ohne daß seine anwendungstechnischen Eigenschaften beeinträchtigt werden. Mit der erfindungsgemäßen Vorrichtung kann eine Volumenverminderung von 30 bis 35 % oder mehr erzielt werden.

Beispiel

Ein 55 m³ fassender Straßensilowagen wird in angekippter Stellung mit einem pyrogen hergestellten Siliciumdioxid, welches eine mittlere Teilchengröße von 7 nm und eine Stampfdichte von 35 g/l aufweist, aus einem Silo mittels Fluidisierungsluft durch freien Fall in Nähe des oberen Deckels befüllt.

Die aus dem Silo stammende Fluidisierungsluft wird gleichzeitig von den in dem Silobehälter parallel zur Längsachse des Silobehälters angeordneten Entlüftungsleitungen abgesaugt. Der dabei angewandte Unterdruck beträgt 700 mm Wassersäule.

Nach einer Füllzeit von 60 Minuten ist der Silobehälter des Silofahrzeuges randvoll. Durch Absitzenlassen und weiteres Absaugen der eingeschlossenen Luft wird der freie Raum in dem Silofahrzeug mit pyrogen hergestelltem Siliciumdioxid aufgefüllt.

Nach Abschluß des Befüllens enthält der Silobehälter des Straßensilowagens 2.700 kg pyrogen hergestelltes Siliciumdioxid.

Die Schüttdichte des eingefüllten Siliciumdioxides wird aus dem Volumen und dem Gewicht ermittelt. Sie beträgt 49 g/l. Die dabei erzielte Volumenverminderung (Verdichtung) des pyrogen hergestellten Siliciumdioxides beträgt 35 %.

Die in dem Silobehälter des Straßensilowagens eingebauten Entlüftungsleitungen sind vier parallel zur Längsachse angeordnete Rohre mit 200 mm Durchmesser und 10 m Länge. Diese Rohre weisen in der Rohrwand verschiedene Öffnungen auf, die mit einem Filtertuch abgedeckt sind.

Die gesamte Filterfläche beträgt 25.2 m².

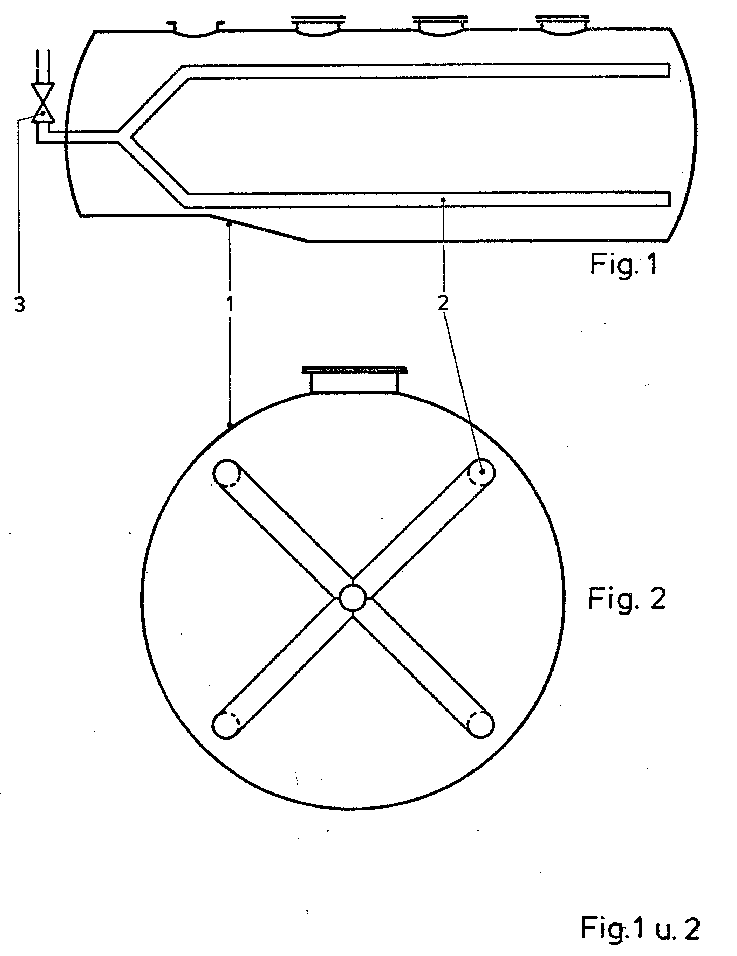

Eine schematische Anordnung der erfindungsgemäßen Vorrichtung ist in der Zeichnung dargestellt. So zeigt die Figur 1 einen Längsschnitt durch den Silobehälter des Silofahrzeuges, in dem die vier Entlüftungsleitungen 2 angeordnet sind. Diese sind über das Ventil 3 mit einer Saugvorrichtung verbunden.

Die Figur 2 zeigt den Silobehälter 1 im Querschnitt mit den vier Entlüftungsleitungen 2.

**Anspruch**

Fahrzeugsilo (1) mit horizontaler Längsachse zum Befüllen mit pulverförmigen, pyrogen hergestellten Oxiden von Metallen oder Metalloiden mit einer unter Unterdruck stehenden Entlüftungsvorrichtung, die die Förderluft absaugt, dadurch gekennzeichnet, daß die Entlüftungsvorrichtung mindestens zwei parallel zur Silolängsachse angeordnete Entlüftungsleitungen (2) aufweist, die zum Entfernen der zwischen den Stoffteilchen befindlichen Luft dienen.

**Claim**

A vehicle silo (1) having a horizontal longitudinal axis, for filling with pulverulent pyrogenically produced oxides of metals or metalloids, comprising a deaeration device which is under reduced pressure and suction filters the conveyed air, characterised in that the deaeration device has at least two deaerating lines (2) which are positioned parallel to the longitudinal axis of the silo and are used to remove the air located between the particles of the substance.

**Revendication**

Silo de véhicule de transport (1), à axe horizontal, pour oxydes de métaux ou de métalloïdes, pulvérulents, obtenus par voie pyrogénique, avec un dispositif de désaération sous pression réduite, qui aspire l'air ayant servi au transfert, silo caractérisé en ce que le dispositif de désaération comporte au moins deux conduites de désaération (2) parallèles à l'axe longitudinal du silo, qui servent à éliminer à travers une vanne (3) l'air se trouvant entre les particules de matière.

Fig. 1

Fig. 2

Fig. 1 u. 2